# EUROPEAN PATENT SPECIFICATION

(11) **EP 1 866 905 B1**
(45) Date of publication and mention of the grant of the patent: **28.10.2009**
(21) Application number: 06739140.9
(22) Date of filing: 21.03.2006
(51) Int. Cl.: G09G 5/00, G06F 3/14, G06F 13/38

(54) **DUAL PURPOSE VIDEO ADAPTER PORT**
VIDEOADAPTERANSCHLUSS MIT ZWEIFACHZWECK
PORT D'ADAPTATION VIDEO POLYVALENT

(30) Priority: 05.04.2005 US 668563 P; 28.07.2005 US 192215
(43) Date of publication of application: 19.12.2007
(73) Proprietor: ADVANCED MICRO DEVICES, INC., Sunnyvale CA 94088-3453 (US)
(72) Inventor: PERLEY, Tim, E., Boulder, Colorado 80301-3056 (US); STEMBER, Michael, J., Longmont, Colorado 80504 (US)
(74) Representative: Eve, Rosemary Margaret
(86) International application number: PCT/US2006/010235
(87) International publication number: WO 2006/107588

(56) References cited:
- JP-A- 59 112 333
- US-A- 6 061 747
- US-B1- 6 847 335

## Description

### BACKGROUND OF THE INVENTION

### Technical Field

The present invention relates to the field of information processing systems. In one aspect, the present invention relates to a system and method for configuring a display port for use as a data channel and as a data port for accessing configuration or diagnostic information relating to the information processing system.

### Background Art

Computer systems have attained widespread use for providing information management capability to many segments of today's society. A personal computer system can usually be defined as a microcomputer that includes a system unit having a system processor and associated volatile and non-volatile memory, a display monitor, a keyboard, a fixed disk storage device, an optional removable storage device and an optional printer. These personal computer systems are information processing systems which are designed primarily to give independent computing power to a single user (or a group of users in the case of personal computers which serve as computer server systems) and are inexpensively priced for purchase by individuals or small businesses.

In recent years, there has been significant growth in the use of the personal computers to exchange information over the Internet. This exchange of information is based on a client/server model with the user's personal computer operating as the client to access data stored on a plurality of Internet servers. Some Internet service providers provide a computer to a user as part of a contractual relationship to provide Internet service. These computers must be configured with a minimum of components and, therefore, the number of input/output ports is necessarily limited. As a result, it is difficult for developers to access these computing systems for diagnostic and repair procedures. As a result, these systems usually must be disassembled to access an internal probe point. Disassembling a system is undesirable as it is time consuming and can be destructive. It is also undesirable as some software developers are uncomfortable working with a partially disassembled system. It would be preferable to be able to tap into an existing port/connector that is used for a standard function and re-use it for delivery of debug messages.

### SUMMARY OF THE INVENTION

The present invention provides a method and apparatus for using a video port, such as a display data channel (DDC) port, in two modes for transmitting and receiving serial data streams. In one mode, the DDC port is used to control the operation of a video display of an information processing system, such as a personal internet communicator (PIC). In another mode, the DDC channel is used as a serial port for accessing the PIC system for diagnostic and configuration purposes.

The objects, advantages and other novel features of the present invention will be apparent to those skilled in the art from the following detailed description when read in conjunction with the appended claims and accompanying drawings.

### BRIEF DESCRIPTION OF THE DRAWINGS

Figure 1 is a block diagram of a plurality of computer systems communicating over one or more communication networks.

Figure 2 is a system block diagram of a computer system, such as a personal Internet communicator, in accordance with various embodiments of the present invention.

Figure 3 shows a block diagram of a processor system for use in the personal Internet communicator.

### MODES FOR CARRYING OUT THE INVENTION

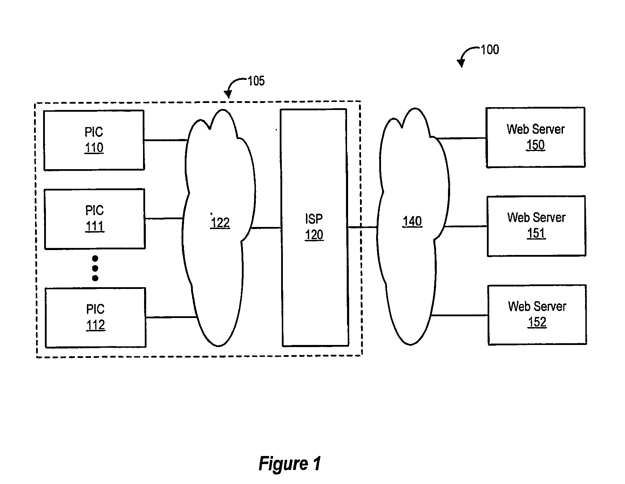

Referring to Figure 1, a block diagram of an exemplary network 100 is shown wherein a plurality 105 of computer systems 110, 111, 112 communicate over one or more communication networks 140. As illustrated, each computer system (e.g., 110) - also referred to as a multimedia access devices or personal Internet communicators (PICs) - is operably coupled to an Internet service provider (ISP) 120 via one or more communication links 122. The Internet service provider 120 is coupled to the Internet 140 that is further coupled to a plurality of Web host servers 150, 151, 152. A user wishing to access information on the Internet uses a PIC (e.g., 110) to execute an application program stored on the PIC known as a Web browser.

The PIC 110 includes communication hardware and software that allows the PIC 110 to send and receive communications to and from the Internet service provider 120. The communications hardware and software allows the PIC 110 to establish a communication link with the Internet service provider 120. The communication link may be any of a variety of connection types including a wired connection, a direct link such as a digital subscriber line (DSL), T1, integrated services digital network (ISDN) or cable connection, a wireless connection via a cellular or satellite network, phone modem dialup access or a local data transport system, such as Ethernet or token ring over a local area network.

When the customer enters a request for information by entering commands in the Web browser, the PIC 110 sends a request for information, such as a search for documents pertaining to a specified topic, or a specific Web page to the Internet service provider 120 which in turn forwards the request to an appropriate Web host server 150 via the Internet 140. The Internet service provider 120 executes software for receiving and reading requests sent from the browser. The Internet service provider 120 executes a Web server application program that monitors requests, services requests for the information on that particular Web server, and transmits the information to the user's PIC 110.

Each Web host server 150, 151, 152 on the Internet has a known address that the user supplies to the Web browser to connect to the appropriate Web host server. If the information is not available on the user's Web host server 150, the Internet 140 serves as a central link that allows Web servers 150, 151, 152 to communicate with one another to supply the requested information. Because Web servers 150, 151, 152 can contain more than one Web page, the user will also specify in the address which particular Web page he wants to view. The address, also known as a universal resource locator (URL), of a home page on a server is a series of numbers that indicate the server and the location of the page on the server, analogous to a post office address. For simplicity, a domain name system was developed that allows users to specify servers and documents using names instead of numbers. A URL may further specify a particular page in a group of pages belonging to a content provider by including additional information at the end of a domain name.

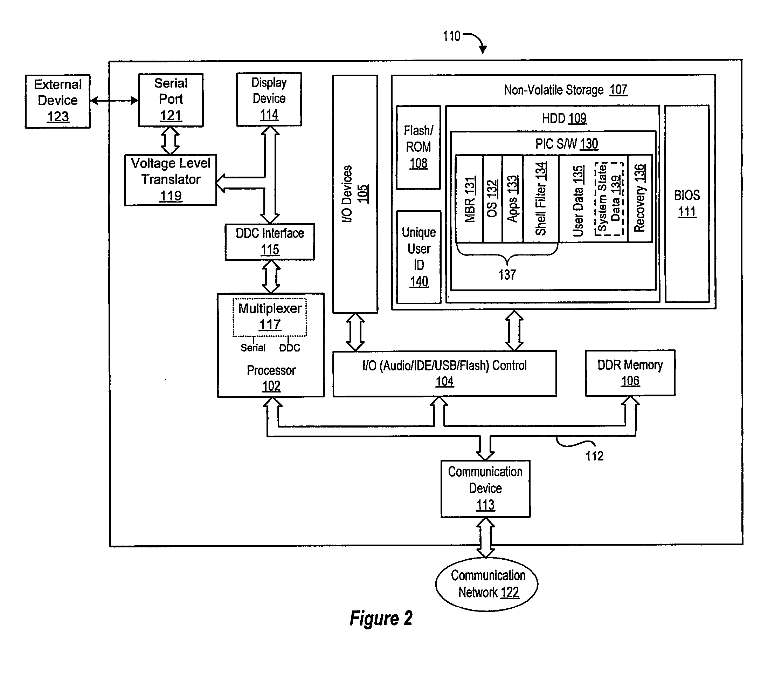

Referring to Figure 2, a block diagram of PIC 110 is shown. In accordance with a selected embodiment of the present invention, the PIC 110 is designed to be an affordable, easy-to-use and robust consumer device that provides managed Internet access for first-time technology users. To keep the cost affordable and maintain required consumer functionality, a selected embodiment of the PIC 110 includes a monitor or other display device 114 operably coupled to the processor by a display data channel (DDC) interface 115 and basic input/output devices 115, such as a USB keyboard and a USB mouse. In addition, ease of use of the PIC 110 is promoted by using preinstalled software with fixed functionality that cannot be upgraded by the user. For example, the preinstalled software may include a basic operating system (such as the Windows CE operating system) and a suite of productivity tools, including communications applications (such as an Internet browser, e-mail, instant messaging, Macromedia Flash, media player, spreadsheet and word processor), viewer applications (e.g., viewers for PowerPoint, Images and PDF), and print drivers.

Preinstalled software with fixed or reduced functionality improves the first-time user experience by removing complexity from the user's interaction with the PIC 110. To this end, control functionality is included in the PIC 110 to prevent the user from deleting important programs, such as operating system files, application software, program launch icons, start menu items, program files, preinstalled content or other essential files. In addition or in the alternative, the file navigation capabilities provided to the user are structured in an intuitive way to hide program files stored in a hidden partition, such as a system partition and/or to limit access to files and user data stored in a predetermined partition of the hard drive, such as a "My Documents" directory.

The PIC 110 includes a processor 102, input/output (I/O) control device 104, memory (including volatile random access memory (RAM) memory 106 and non-volatile memory 107), communication device 113 (such as a modem) and a display 114. The processor 102, I/O controller 104, memory 106 and communication device 113 are interconnected via one or more buses 112. In a selected embodiment, the processor 102 is implemented as an AMD Geode GX 32-bit x86 compatible processor, the memory 106 is implemented as a 128 MB DDR memory and the display 114 may be implemented as a CRT monitor. In addition, the non-volatile memory 107 may include a hard disk drive 109 that is implemented as an integrated 3.5 inch hard disk drive with a minimum capacity of, e.g., 10GB. Either or both of the memories 106, 107 may be integrated with or external to the PIC 110. As for the communication device 113, an integrated 56K ITU v. 92 Modem with an external connector may be used to support different phone systems throughout the world, though other modems (e.g., a soft modem) may also be used. Of course, it will be appreciated that other device configurations may also be used for the processor 102, memory 106, 107, display 114 and communication device 113. For clarity and ease of understanding, not all of the elements making up the PIC 110 are described in detail. Such details are well known to those of ordinary skill in the art, and may vary based on the particular computer vendor and microprocessor type. Moreover, the PIC 110 may include other buses, devices, and/or subsystems, depending on the implementation desired. For example, the PIC 110 may include caches, modems, parallel or serial interfaces, SCSI interfaces, network interface cards, and the like.

As illustrated in Figure 2, the I/O control device 104 is coupled to I/O devices 105, such as one or more USB ports, a keyboard, a mouse, audio speakers, etc. The I/O control device 104 is also coupled to non-volatile storage 107, such as a flash memory or other read only memory (ROM) 108 and/or hard disk drive 109. The PIC 110 may be connected to a communication network 122, such as the Internet, by a communication device 113, such as a modem, but the connection may be established by any desired network communication device known to those of skill in the art. Though the processor 102 is shown as being coupled directly to a display device 114, the processor may also be coupled indirectly to the display 114 through a display or I/O controller device. Similarly, the processor is shown as being coupled through the I/O controller 104 to the non-volatile memory 107, though direct coupling is also contemplated.

Various programming codes and software are stored in the PIC memory. For example, the basic input/output system (BIOS) code that starts the PIC 110 at startup may be stored in a BIOS ROM device 111 of the non-volatile storage 107, such as a ROM (Read Only Memory) or a PROM (Programmable ROM) such as an EPROM (Erasable PROM), an EEPROM (Electrically Erasable PROM), a flash RAM (Random Access Memory) or any other type of memory appropriate for storing BIOS. The BIOS/Bootloader 111 is essentially invisible to the user and includes a compatible bootloader to enable the PIC operating system to be an embedded closed operating system, such as a Windows CE type operating system, though any operating system (including but not limited to Windows-based and Linux-based Operating Systems) could be supported by the BIOS code. The BIOS/Bootloader 111 is essentially invisible to the user and boots to the operating system.

PIC software 130 and user data may also be stored on the hard drive 109 of the non-volatile storage 107 and executed and/or processed by processor 102. The PIC software 130 may include a master boot record (MBR) 131, an operating system 132, application program(s) 133, user data 135, and a hidden image recovery module 136. The MBR 131 is a small program that is executed when the PIC 110 boots up, and typically resides on the first sector of the hard drive 109. In addition, the hard drive 109 contains a table of partitions on the disk (including the system partition and the user partition). As for the operating system 132, several uniquely configurable operating parameters that can affect the performance of the system are preconfigured as part of the software 130 when it is initially installed on the drive 109. The software 130 also includes application programs 133 that are needed for the PIC 110 to function as specified. For example, the applications 133 may include web browser, Flash player, presentation viewer for PowerPoint, chat, game, compression utility, e-mail, word processor, spreadsheet, PDF viewer, media player and/or drawing applications. In addition, the user data 135 stores all of the user's data so that a user has direct access to the user data. The user data partition 135 includes a system state data file that contains information relating to the settings and operating parameters for the applications and data stored in the PIC 110. The system state information contained in the system state data file 139 includes, but is not limited to, software patches, driver updates and registry data corresponding to a particular operating configuration for the PIC 110. The system state data file 139 is updated on a continuous basis by performing a "registry sniffing" protocol whereby incremental changes in the system's state are monitored.

The system partition 137 is hidden from the user using aggressive concealment techniques to prevent the user from inadvertently or intentionally accessing files stored in this partition. The recovery partition 136 is hidden from the user by using a partition label that is not visible to the user and is not identifiable by any operating system.

As was discussed above, computing devices such as the PIC 110 must be configured with a minimum of components. As a result, the number of input/output ports is necessarily limited. With limited port access, it is difficult for developers to access these computing systems for diagnostic and repair procedures. In the present invention, a method and apparatus is provided that enables a VGA video port comprising DDC functionality to be used as a serial communication port for diagnostic and configuration procedures.

In the present invention, the conductors of the DDC interface 115 are used in two modes. In a first mode, the DDC conductors are used to provide an interface for the video display 114. In a second mode, the DDC conductors are used to provide a serial port 121 for access to the PIC system for diagnostic and configuration purposes. The serial port of the present invention can be configured to operate in accordance with a plurality of protocols, including RS232, Universal Serial Bus (USB), IEEE 1394 (sometimes referred to as Firewire®), or Ethernet. The output of the serial port 121 can be provided to an external device 123 that can be a diagnostic system or other device capable of using the serial data stream from the serial port 121. As will be understood by those of skill in the art, a serial port is desirable as a diagnostic/debug port because it is well defined and understood by every operating system. Many operating systems use a serial port for debug messages.

The DDC channel is typically used once during boot of the operating system to interrogate the capabilities of the external display. In the present invention, a multiplexer function 117, controlled by the processor 102, is used to multiplex the signals used for DDC functionality with the signals for the serial port 121. Under control of the processor 102, the two wires that transport DDC signals are used to operate as a two wire serial port 121 for diagnostic purposes or to provide a serial port for other purposes.

In one embodiment of the present invention, when the OS (operating system) makes a BIOS call to interrogate the external monitor while the serial port is enabled, the OS is informed no DDC channel is available so it automatically falls back to a default display video signal (e.g., 800 x 600, 72Hz) and does not exploit any possible high end feature of the display. This prevents possible interference between the DDC channel and the serial port. In an alternate embodiment of the invention, the BIOS provides a predetermined DDC configuration that allows the system to maintain operation of a DDC-enabled monitor while the DDC interface 115 is also enabling operation of the serial port 121. In yet another embodiment of the invention, the processor 102 is operable to download and store a display capabilities table corresponding to a desired diagnostic function. The processor 102 is further operable to use the stored display capabilities table to cause the PIC to emulate a particular resolution and refresh rate for diagnostic purposes.

In the present invention, a serial port converter can be placed between a VGA connector output of the PIC and a monitor cable that is attached to the display 114, as will be understood by those of skill in the art. This interface intercepts the signals transmitted over the two serial communication pins.

A voltage level translator 119 is used to modify the signals to be compatible a plurality of serial protocols. For example, a 3 volt signal level typically associated with a DDC conductor can be translated to +/- 12 volts for a RS-232 serial port. As will be understood by those of skill in the art, the voltage levels of the signals can similarly be translated to accommodate the other serial protocols described herein.

The PIC 110 includes a unique user identifier (UUID) 140 that can be used by the ISP 120 to control certain data processing capabilities of the PIC and also can be used to restore the operating status of the PIC in the event of a catastrophic failure. Specifically, the UUID 140 can be used by the ISP 120 to identify a specific PIC 110 and to target that PIC 110 for execution of a protocol to use the recovery partition 136 to restore the system partition 137 to a known good operating state.

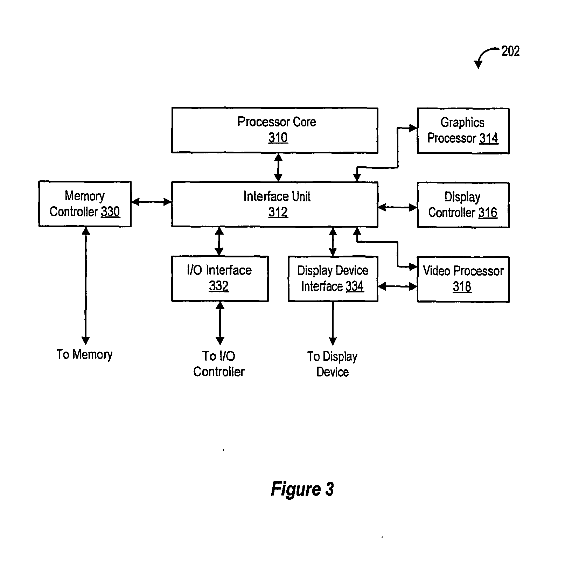

Referring to Figure 3, a block diagram is shown of the processor 102 that is used to control the various system components and software modules to implement serial port functionality using the DDC interface. In one embodiment, the processor 102 is a Geode GX2 processor available from Advanced Micro Devices. The processor 102 includes a processor core 210, a bus or interface unit 212, a graphics processor 214, a display controller 216, and a video processor 218. The processor 102 also includes a memory controller 230, an I/O controller interface 232, and a display device interface 234, though it will be appreciated that these controllers and interfaces may be implemented externally to the processor 102. In the illustrated embodiment, the processor 102 executes software stored in the memory 106, 107 to prevent access and/or deletion of protected files in the PIC software 130, such as the operating system or application files.

## Claims

1. A method for providing an access port for a personal Internet communicator (110) comprising:
providing a video data port having a plurality of conductors operable to enable a video data function; and
using said plurality of conductors to provide serial data port for transmission in accordance with a serial data transmission protocol for access to said personal Internet communicator for diagnostic and configuration purposes.

2. The method of claim 1, wherein said video port comprises a display data channel (DDC) video port.

3. The method of claim 2, wherein said serial protocol comprises RS232.

4. The method of claim 2, wherein said serial protocol comprises universal serial bus (USB).

5. The method of claim 2, wherein said serial protocol comprises IEEE 1394.

6. The method of claim 2, wherein said serial protocol comprises Ethernet.

7. The method of claim 2, wherein the voltage levels of said plurality of conductors are controlled in accordance with said serial protocol when said conductors are transmitting serial data.

8. The method of claim 2, wherein operation of said DDC port is disabled.

9. The method of claim 8, wherein a display connected to said DDC video port operates at a default resolution and refresh rate.

10. The method of claim 8, wherein a display connected to said DDC video port operates at a resolution and refresh rate governed by an entry in a stored DDC capabilities table

11. The method of claim 1, wherein signal from said conductors used for DDC functionality are multiplexed with signals from said conductors for said serial port.

12. The method of claim 11 wherein wires transporting said DDC signals are used to operate as a two wire serial port for diagnostic purposes.

13. An apparatus for providing an access port for a personal Internet communicator (PIC); comprising:
a video data port having a plurality of conductors operable to enable a video data function; and
a processor operable to generate data signals to use said plurality of conductors to provide a serial data port for transmission in accordance with a serial data transmission protocol for access to the personal Internet communicator for diagnostic and configuration purposes.

14. The apparatus of claim 13, wherein said video port comprises a display data channel (DDC) video port.

15. The apparatus of claim 14 wherein said serial protocol comprises RS232.

16. The apparatus of claim 14 wherein said serial protocol comprises universal serial bus (USB).

17. The apparatus of claim 14 wherein said serial protocol comprises IEEE 1394.

18. The apparatus of claim 14 wherein said serial protocol comprises Ethernet.

19. The apparatus of claim 14, wherein the voltage levels of said plurality of conductors are controlled in accordance with said serial protocol when said conductors are transmitting serial data.

20. The apparatus of claim 14, wherein operation of said DDC port is modified to limit the DDC functionality of a DDC display connected thereto.

21. The apparatus of claim 20 wherein a display connected to said DDC video port operates at a default resolution and refresh rate.

22. The apparatus of claim 20 wherein a display connected to said DDC video port operates at a resolution and refresh rate governed by an entry in a stored DDC capabilities table.

23. The apparatus of claim 14 including a multiplexer for multiplexing signals from said plurality of conductors enabling said video data function and said data signals for said serial data port.

24. The apparatus of claim 23 wherein two wires transport DDC signals, said two wires operating as a two wire serial port for diagnostic purposes.

## Patentansprüche

1. Verfahren zur Bereitstellung eines Zugangsanschlusses für eine persönliche Internet-Kommunikationseinrichtung (110) mit:
Bereitstellen eines Videodatenanschlusses mit mehreren Leitern, die geeignet sind, um eine Videodatenfunktion zu ermöglichen; und
Verwenden der mehreren Leiter, um einen seriellen Datenanschluß zur Übertragung entsprechend einem seriellen Datenübertragungsprotokoll bereitzustellen, um auf die persönliche Internet-Kommunikationseinrichtung für Diagnose- und Konfigurationszwecke zuzugreifen.

2. Verfahren nach Anspruch 1, wobei der Videoanschluß einen Anzeigedatenkanal-(DDC)-Videoanschluß umfasst.

3. Verfahren nach Anspruch 2, wobei das serielle Protokoll das RS232-Protokoll umfasst.

4. Verfahren nach Anspruch 2, wobei das serielle Protokoll den universellen seriellen Bus (USB) umfasst.

5. Verfahren nach Anspruch 2, wobei das serielle Protokoll das IEEE-1394-Protokoll umfasst.

6. Verfahren nach Anspruch 2, wobei das serielle Protokoll das Ethernet umfasst.

7. Verfahren nach Anspruch 2, wobei die Spannungspegel der mehreren Leiter entsprechend dem seriellen Protokoll gesteuert werden, wenn die Leiter serielle Daten übertragen.

8. Verfahren nach Anspruch 2, wobei der Betrieb des DDC-Anschlusses deaktiviert wird.

9. Verfahren nach Anspruch 8, wobei eine Anzeige, die mit dem DDC-Videoanschluß verbunden ist, mit einer voreingestellten Auflösung und einer voreingestellten Auffrischungsrate arbeitet.

10. Verfahren nach Anspruch 8, wobei eine Anzeige, die mit dem DDC-Videoanschluß verbunden ist, mit einer Auflösung und einer Auffrischungsrate arbeitet, die durch einen Eintrag in einer gespeicherten DDC-Eigenschaftentabelle gesteuert werden.

11. Verfahren nach Anspruch 1, wobei Signale von den Leitern, die für die DDC-Funktion verwendet werden, mit Signalen aus den Leitern für den seriellen Anschluß im Multiplexbetrieb geführt werden.

12. Verfahren nach Anspruch 11, wobei Drähte zum Transport der DDC-Signale verwendet werden, derart, dass sie als ein serieller Zweidraht-Anschluß für die Diagnosezwecke arbeiten.

13. Vorrichtung zum Bereitstellen eines Zugangsanschlusses für eine persönliche Internet-Kommunikationseinrichtung (PIC) mit:
einem Vidoedatenanschluß mit mehreren Leitern, die ausgebildet sind, eine Videodatenfunktion zu ermöglichen; und
einem Prozessor, der ausgebildet ist, Datensignale zu erzeugen, um die mehreren Leiter zu verwenden, so dass ein serieller Datenanschluß für die Übertragung gemäß einem seriellen Datenübertragungsprotokoll bereitgestellt wird, um auf die persönliche Internet-Kommunikationseinrichtung für Diagnose- und Konfigurationszwecke zuzugreifen.

14. Vorrichtung nach Anspruch 13, wobei der Vidoeoanschluß einen Anzeigedatenkanal-(DDC)-Videoanschluß umfasst.

15. Vorrichtung nach Anspruch 14, wobei das serielle Protokoll das RS232-Protokoll umfasst.

16. Vorrichtung nach Anspruch 14, wobei das serielle Protokoll den universellen seriellen Bus (USB) umfasst.

17. Vorrichtung nach Anspruch 14, wobei das serielle Protokoll das IEEE-1394-Protokoll umfasst.

18. Vorrichtung nach Anspruch 14, wobei das serielle Protokoll das Ethernet-Protokoll umfasst.

19. Vorrichtung nach Anspruch 14, wobei die Spannungspegel der mehreren Leiter entsprechend dem seriellen Protokoll gesteuert sind, wenn die Leiter serielle Daten übertragen.

20. Vorrichtung nach Anspruch 14, wobei der Betrieb des DDC-Anschlusses modifiziert ist, um die DDC-Funktion eines damit verbundenen DDC-Anzeigegeräts zu beschränken.

21. Vorrichtung nach Anspruch 20, wobei eine Anzeige, die mit dem DDC-Videoanschluß verbunden ist, bei einer voreingestellten Auflösung und einer voreingestellten Auffrischungsrate arbeitet.

22. Vorrichtung nach Anspruch 20, wobei eine mit dem DDC-Videoanschluß verbundene Anzeige mit einer Auflösung und einer Auffrischungsrate arbeitet, die durch einen Eintrag in einer gespeicherten DDC-Eigenschaftentabelle gesteuert sind.

23. Vorrichtung nach Anspruch 14, mit einem Multiplexer zum Multiplexbetrieb von Signalen aus den mehreren Leitern, die die Videodatenfunktion ermöglichen, und den Datensignalen für den seriellen Datenanschluß.

24. Vorrichtung nach Anspruch 23, wobei zwei Drähte DDC-Signale übertragen, wobei die beiden Drähte als ein serieller Zweidrahtanschluß für Diagnosezwecke fungieren.

## Revendications

1. Procédé permettant de fournir un port d'accès à un communicateur Internet personnel (110), comprenant :
la fourniture d'un port de données vidéo ayant une pluralité de conducteurs exploitable pour valider une fonction de données vidéo ; et
l'utilisation de ladite pluralité de conducteurs pour fournir un port de données en série pour une transmission en conformité avec un protocole de transmission de données en série permettant un accès audit communicateur Internet personnel à des fins de diagnostic et de configuration.

2. Procédé selon la revendication 1, dans lequel ledit port vidéo comprend un port vidéo pour canal de données d'affichage (DDC).

3. Procédé selon la revendication 2, dans lequel ledit protocole série comporte une interface RS232.

4. Procédé selon la revendication 2, dans lequel ledit protocole série comprend un Bus Série Universel (Standard de connexion USB).

5. Procédé selon la revendication 2, dans lequel ledit protocole série comprend un standard IEEE 1394.

6. Procédé selon la revendication 2, dans lequel ledit protocole série comprend un réseau ETHERNET.

7. Procédé selon la revendication 2, dans lequel les niveaux de tension de ladite pluralité de conducteurs sont commandés selon ledit protocole série lorsque lesdits conducteurs sont en cours de transmission de données série.

8. Procédé selon la revendication 2, dans lequel une opération dudit port DDC est invalidée.

9. Procédé selon la revendication 8, dans lequel un écran connecté audit port vidéo DDC opère à une fréquence de résolution et de rafraîchissement par défaut.

10. Procédé selon la revendication 8, dans lequel un écran connecté audit port vidéo DDC fonctionne à une fréquence de résolution et de rafraîchissement gouvernée par une entrée dans une table de capacités DDC mémorisée.

11. Procédé selon la revendication 1, dans lequel des signaux provenant desdits conducteurs utilisés pour une fonctionnalité DDC sont multiplexés avec des signaux provenant desdits conducteurs correspondant au dit port série.

12. Procédé selon la revendication 11 dans lequel des conducteurs filaires transportant lesdits signaux DDC sont utilisés pour agir comme un port série à deux fils à des fins de diagnostic.

13. Dispositif permettant de fournir un port d'accès à un communicateur Internet personnel (PIC) ; comportant :
un port de données vidéo ayant une pluralité de conducteurs exploitable pour valider une fonction de donnés vidéo ; et
un processeur exploitable en vue de générer des signaux de données pour utiliser ladite pluralité de conducteurs afin de fournir un port de données série pour une transmission en conformité avec un protocole de transmission de données série permettant un accès au communicateur Internet personnel à des fins de diagnostic et de configuration.

14. Dispositif selon la revendication 13, dans lequel ledit port vidéo comprend un port vidéo pour canal de données d'affichage (DDC).

15. Dispositif selon la revendication 14 dans lequel ledit protocole série comporte une interface RS232.

16. Dispositif selon la revendication 14 dans lequel ledit protocole comprend un Bus Série Universel (connexion standard USB).

17. Dispositif selon la revendication 14 dans lequel ledit protocole série comporte un standard IEEE 1394.

18. Dispositif selon la revendication 14 dans lequel ledit protocole série comprend un réseau ETHERNET.

19. Dispositif selon la revendication 14, dans lequel les niveaux de tension de ladite pluralité de conducteurs sont commandés en conformité avec ledit protocole série lorsque lesdits conducteurs sont en cours de transmission de données série.

20. Dispositif selon la revendication 14, dans lequel une opération dudit port DDC est modifiée pour limiter la fonctionnalité DDC d'un écran DDC qui lui est connecté.

21. Dispositif selon la revendication 20, dans lequel un écran connecté audit port vidéo DDC opère à une fréquence de résolution et de rafraîchissement par défaut.

22. Dispositif selon la revendication 20 dans lequel un écran connecté audit port vidéo DDC opère à une fréquence de résolution et de rafraîchissement gouvernée par une entrée dans une table de capacités DDC mémorisée.

23. Dispositif selon la revendication 14 comportant un multiplexeur permettant de multiplexer des signaux provenant de ladite pluralité de conducteurs validant ladite fonction de données vidéo et lesdits signaux de données correspondant au dit port de données série.

24. Dispositif selon la revendication 23 dans lequel deux conducteurs filaires transportent des signaux DDC, lesdits deux fils opérant comme un port série bifilaire à des fins de diagnostic.
